# EUROPÄISCHE PATENTSCHRIFT

(11) **EP 1 160 031 B1**
(45) Veröffentlichungstag und Bekanntmachung des Hinweises auf die Patenterteilung: **19.01.2005**
(21) Anmeldenummer: 00111606.0
(22) Anmeldetag: 31.05.2000
(51) Int. Cl.: B22D 41/54, C04B 14/36

(54) **Verfahren zum Beschichten von Ausgüssen, Giessrohren, Giessstrahlschutzrohren und dergleichen Werkstücken zum Vergiessen und Überführen von Schmelzen**
Process for coating pouring nozzles, casting tubes, molten metal jet shrouding tubes and similar objects for casting or transferring molten metals
Procédé de revêtement de becs de coulée, busettes de coulée, tubes protecteurs de jets de coulée et objets analogues pour la coulée et le transfert de métaux fondus

(43) Veröffentlichungstag der Anmeldung: 05.12.2001
(73) Patentinhaber: TYK Europe GmbH, 47229 Duisburg (DE)
(72) Erfinder: Schrick, Günther, 45721 Haltern (DE)
(74) Vertreter: Stenger, Watzke & Ring Patentanwälte

(56) Entgegenhaltungen:
- EP-A- 0 342 661
- EP-A- 0 494 015
- WO-A-99/57077
- DE-A- 19 727 649
- FR-A- 2 667 310
- US-A- 3 269 848
- US-A- 4 734 031
- US-A- 5 434 113

## Beschreibung

Die vorliegende Erfindung betrifft ein Verfahren zum Beschichten von Ausgüssen, Gießrohren, Gießstrahlschutzrohren und dergleichen Werkstücken zum Vergießen oder Überführen von Schmelzen, insbesondere von in der Stahlindustrie verwendeten Metallschmelzen.

Beim Vergießen von Schmelzen werden diese üblicherweise von einem Verteilergefäß oder einem Halteofen über ein Gießrohr zur Form bzw. Kokille geführt. In Abhängigkeit der Schmelze, insbesondere bei Metallschmelzen unterschiedlicher Materialien wie Stahl, Aluminium oder dergleichen, und in Abhängigkeit der Gießverfahren kommen Gießrohre aus verschiedensten Materialien zum Einsatz. Bei dem Schmelzefluß sind Thermoschockreaktionen und Einfrierungen der Schmelze problematisch, die durch Wärmeabstrahlung im Bereich der Ausgüsse, Gießrohre und dergleichen Werkstücke zum Vergießen bzw. Überführen von Schmelzen auftreten. Thermoschockreaktionen und Einfrierungen werden dabei insbesondere aufgrund der Wärmeabstrahlung der Werkstücke verursachte Temperaturschwankungen ausgelöst.

Thermoschockreaktionen und Einfrierungen bedingen dabei die Notwendigkeit einer Reinigung der zum Vergießen eingesetzten Schmelzen, das üblicherweise mittels Sauerstofflanzen und dergleichen durch Abbrennen der Schmelzen und angebackener Metalle, beispielsweise Stahl oder Aluminium, erfolgt. Die Reinigung der zum Vergießen von Schmelzen eingesetzten Werkstücke durch Abbrennen wirkt sich dabei negativ auf die Haltbarkeit der Werkstücke aus.

Zur Reduzierung von Thermoschockreaktionen und Einfrierungen ist es bekannt, Ausgüsse, Gießrohre, Gießstrahlschutzrohre und dergleichen Werkstücke zum Vergießen und Überführen von Schmelzen an der Außenseite mit einer Isolierung zu versehen. Die an der Außenseite der Werkstücke angebrachte Isolierung soll im Falle des Aufheizens der Werkstücke Thermoschockreaktionen minimieren und Einfrierungen verhindern.

Zur Isolierung wurden bisher Isolationsfasermaterialien verwendet, die vom Gesetzgeber aus gesundheitlichen Gründen als Karzinogene der Kategorie 2 mit Substitutionsgebot klassifiziert wurden. Einige nicht klassifizierte Substitutionsstoffe, insbesondere Substitutionsstoffe mit geringem Tonerdefaseranteil, weisen bei Temperaturen über 1200 C° Zersetzungs- und Aufschmelzerscheinungen einzelner Fasern auf, die die Isolationswirkung zerstören, zumindest jedoch vermindern. Darüber hinaus sind einige der Zersetzungsprodukte gesundheitlich bedenklich. Die meisten Substitutionsstoffe sind nur bis etwa 1000 C° einsetzbar.

Neuere in der Stahlindustrie verwendete Gießverfahren, beispielsweise die CSP-Technologie, erfordern Isolationen für Aufheiztemperaturen über 1200 C°, insbesondere da Thermoschockreaktionen und Einfrierungen bei diesen Verfahren schnell zu Gießabbrüchen führen, da der flüssige Stahl bei diesen Verfahren durch Schlitze mit einer Dicke von 15 mm bis 30 mm in den Ausgüssen vergossen werden.

Ferner setzen die neuen in der Stahlindustrie eingesetzten Gießverfahren komplexe Geometrien der zum Vergießen und Überführen von Schmelzen verwendete Werkstücke voraus, die die Dicke der Isolierung begrenzen.

Der Erfindung liegt in Anbetracht dieses Standes der Technik die **Aufgabe** zugrunde, ein Isolationsmaterial und ein Verfahren zum Beschichten von Ausgüssen, Gießrohren, Gießstrahlschutzrohen und dergleichen Werkstücke zum Vergießen und Überführen von Schmelzen, insbesondere von in der Stahlindustrie verwendeten Metallschmelzen, bereitzustellen, welches es ermöglicht, eine kostengünstige, gesundheits- und umweltunschädliche Isolierung auszubilden, die auch bei hohen Betriebstemperaturen, insbesondere bei Temperaturen über 1200 C°, thermisch stabil ist und eine geringe Wärmeleitfähigkeit aufweist.

Zur technischen **Lösung** der Aufgabe geht die vorliegende Erfindung aus von einem Verfahren zum Beschichten von Ausgüssen, Gießrohren, Gießstrahlschutzrohren und dergleichen Werkstücken zum Vergießen und Überführen von Schmelzen, insbesondere von in der Stahlindustrie verwendeten Metallschmelzen, wie es beschrieben ist in US-A-3 269 848, hierbei wird die Oberflache des Werkstücks lumindest teilweise beschichtet mit einem isolations material bestehend aus einer Mischung aus wenigstens einem Rohstoff und wenigstens einem Bindemittel, welche zumindest nach einem Aushärten eine mikroporöse Struktur ausbildet.

Neben der Materialeigenschaft des Reinstoffes einer Isolierung, beispielsweise 99,9 %-ige Tonerde, hat auch die Struktur, in der die Isolierung vorliegt, beispielsweise hinsichtlich Hohlräumen, Korngrößenverteilung und dergleichen, einen wesentlichen Einfluß auf die thermische Stabilität und die Wärmeleitfähigkeit. Es zeigt sich, daß die Wärmeleitfähigkeit von Isolierungen ganz allgemein mit zunehmender Porösität abnimmt. Der Grund dafür ist, daß Wärmeverluste, insbesondere bei höheren Temperaturen, im wesentlichen über Wärmeabstrahlung erfolgen. Je größer die Porösität einer Isolierung ist, desto mehr weist die Wärmeabstrahlung behindernde Komgrenzen auf.

Erreicht werden soll die Ausbildung einer thermisch stabilen Isolierung mit reduzierter Wärmeabstrahlung und damit geringer Wärmeleitfähigkeit, insbesondere bei Temperaturen über 1200 C°. Die Verwendung eines mikroporösen Rohstoffs erlaubt darüber hinaus eine kostengünstige und im übrigen gesundheits- und umweltunschädliche Ausbildung einer Isolierung. Im übrigen ist es erfindungsgemäß ausreichend, wenn die Mischung zumindest nach einem Aushärten, beispielsweise durch Trocknen oder dergleichen, eine mikroporöse Struktur ausbildet. Dabei kann sowohl der Rohstoff als auch das Bindemittel selbst eine Mischung bzw. ein Bindungssystem darstellen.

Das Isolationsmaterial und die so ausgebildete Beschichtung soll sich eignen für Ausgüsse, Gießrohre, Gießstrahlschutzrohre und dergleichen Werkstücke zum Vergießen oder Überführen von Schmelzen, insbesondere auch für stähleme oder keramische Füllkammern sowie stähleme oder keramische Steigrohre, welche zum Vergießen von Aluminiumschmelzen geeignet sind.

Gemäß der Erfindung wird das Werkstück vor dem Beschichten mit Isolationsmaterial mit einer oxidationshemmenden Beschichtung versehen. Die oxidationshemmende Beschichtung schmilzt dabei beim Aufheizen oder Brennen auf und bildet eine Glasphase. Durch die Glasphase schafft die oxidationshemmende Beschichtung eine Art Vermittlerschicht, die gewährleistet, daß die Isolationsbeschichtung sicher mit den zu beschichtenden. Werkstücken zum Vergießen oder Überführen von Schmelzen verbunden wird. Dies ist insbesondere für Werkstücke zum Vergießen bzw. Überführen von Stahlschmelze in Stranggießverfahren von Bedeutung, die üblicherweise aus Tonerdegraphit, stabilisiertem bzw. teilstabilisiertem Zirkonoxid-Graphit, sowie SiC, SiO₂ oder Si in metallischer Form nebst in der Regel geheimer herstellungsspezifischer Additive vorliegen. Bei diesen Werkstücken ist es problematisch, die Isolationsbeschichtung direkt auf die Oberfläche der Werkstücke aufzutragen oder aufzusprühen, da in diesen Fällen eine ausreichende Verbundfestigkeit zwischen der Isolationsbeschichtung und dem beschichteten Werkstück nicht realisierbar ist, zumindest nicht in der Gestalt, daß die Funktionsfähigkeit der Beschichtung für wenigstens 10 h besteht.

In einer vorteilhaften Ausgestaltung der Erfindung wird die oxidationshemmende Beschichtung durch einen handelsüblichen Mauerhärter oder Putzhärter, der auf die Oberfläche des Werkstücks aufgebracht wird, beispielsweise durch Aufsprühen oder Verspachteln, ausgebildet. Der Mauerhärter bzw. Putzhärter findet dabei standardmäßig in der Bauindustrie Verwendung. Gemäß einer besonders vorteilhaften Ausgestaltung der Erfindung wird für die oxidationshemmende Beschichtung ein handelsüblicher Feuerfestkleber verwendet, der vorteilhafterweise die Bildung von Glasphasen fördert. Als besonders geeignet hat sich ein Kleber, bestehend aus Natriumsilikat und Ton erwiesen, der eine Anwendungstemperatur von bis zu 1200 C° aufweist. Dabei können auch bereits entsprechend oxidationshemmend glasierte Werkstücke, welche handelsüblich erwerblich sind, verwendet und mit einer mikroporösen Beschichtung versehen werden. Die mikroporöse Beschichtung kann dabei auf der oxidationshemmenden Beschichtung bzw. Glasur angeordnet sein oder diese zumindest teilweise Anslösen und mit dieser die mikroporöse Beschichtung ausbilden.

Vorteilhafterweise wird die oxidationshemmende Beschichtung vor dem Beschichten der Werkstücke mit Isolationsmaterial getrocknet, vorzugsweise bei einer Temperatur von 100 C°.

Bei der ersten Verwendung der so beschichteten Werkstücke schmilzt während des Aufheizens des Werkstücks die oxidhemmende Beschichtung auf, in Abhängigkeit des oxidationshemmenden Beschichtungsmaterials in einem Temperaturbereich von etwa 550 C° bis etwa 1200 C°. Die dabei entstehende Glasphase kann dann mit der CA₆-Struktur des SLA-92 reagieren und teilweise anlösen. Dadurch entsteht eine hervorragend haftende Isolationsbeschichtung. Die Reaktion ist temperaturabhängig und bei hohen Temperaturen über 1000 C° bildet sich eine sehr gut haftende Isolationsschicht, die gleichzeitig oxidhemmend ist.

Vorteilhafterweise verstärkt sich diese Reaktion bei zusätzlicher Verwendung eines Feuerfestklebers aufgrund der erhöhten Ausbildung von Glasphasen. Der Feuerfestkleber bewirkt, daß sich die Ausbildung von Glasphasen sowohl beim Temperaturen über 1260 C° als auch bei Temperaturen unter 1000 C° einstellt.

Es hat sich als zweckmäßig erwiesen, bei Temperaturen an der Oberfläche der Werkstücke von etwa 900 C° und darunter dem als Vermittler dienenden Feuerfestkleber Alkalien und/oder Borsäure bzw. deren Derivate zuzufügen. Dadurch wird gewährleistet, daß aufgeschmolzene Glasphasen bereits bei etwa 550 C° ausgebildet werden, so daß sich die zusätzlich oxidationshemmende Isolationsbeschichtung auch bei niedrigen Temperaturen ausbilden kann. Darüber hinaus ist mit der Zugabe von Borsäure der Vorteil verbunden, daß die Viskosität der sich bildenden Glasphasen mit steigender Temperatur zunimmt und so die Haftung und Oxidationshemmung der Beschichtung weiter verbessert.

Darüber hinaus läßt sich durch die Zugabe von Akalien oder Borsäure bzw. deren Derivate die Isolationsbeschichtung unabhängig von der oxidationshemmenden Beschichtung entsprechend den Bedürfnissen der Werkstücke zum Vergießen oder Überführen von Schmelzen anpassen, vorteilhafterweise dergestalt, daß sich eine neu isolierende oxidationshemmende Beschichtung ausbildet. In einer besonders bevorzugten Ausgestaltung der Erfindung wird Borsäure oder Borsäuresalze in Mengen von bis zu 30 Gew.-% verwendet. Es sind jedoch auch Mengen unter 10 Gew.-% und über 30 Gew.-% vorteilhaft geeignet, in Abhängigkeit von Einsatz- und Isolationsbedarf.

Die sich erfindungsgemäß neu bildende isolierende Beschichtung stellt quasi eine Sperrschicht zwischen der umgebenden Atmosphäre und dem Feuerfestmaterial bereit und erfüllt somit den Zweck Oxidation zu unterdrücken, indem die Porösität des Körpers herabgesetzt wird. Damit ist diese Beschichtung zur Verwendung an Stopfenstangen aus Tonerdegrafit wegen der oxidationshemmenden Wirkung besonders geeignet.

Als besonders geeigneter mikroporöser Rohstoff hat sich SLA-92 in einer Korngröße von bis zu 1,0 µm und in Mengen von etwa 65 bis 98 Gew.-%, vorzugsweise in Mengen von etwa 90 Gew.-% erwiesen. SLA-92 ist ein mikroporöses Kalziumhexaaluminat (CaO x 6 Al₂O₃ bzw. CA₆) mit einer Rohdichte von 0,75 g/cm³. SLA-92 enthält etwa 92 % Al₂O₃ und etwa 7,5 % CaO. SLA-92 weist eine hohe Porösität von üblicherweise 75 % und einen Porenradius von 0,5 bis 2,5 µm auf.

Als vorteilhaft hat sich die Verwendung eines Zementes als Bindemittel, vorzugsweise von CA-270, in Mengen von etwa 2 bis 35 Gew.-% vorzugsweise von etwa 10 Gew.%erwiesen. CA-270 ist ein Kalziumalumiatzement der Firma ALCOA. Neben Zement als Bindemittel eignen sich jedoch auch andere Bindungssysteme, insbesondere Phosphatbindungen, Kunstharzbindungen, Wasserglas und dergleichen, sowie organische Binder wie Acrylkleber, Polyesterharze, Epoxiharze oder ähnliche Systeme, die nach dem Abbinden vercrackt werden.

Gemäß einer weiteren vorteilhaften Ausgestaltung der Erfindung umfaßt die Mischung Additive zur Erhöhung der Grünfestigkeit, sowie Additive zur Verbesserung des Abbindeverhaltens.

Verfahrensseitig wird die Oberfläche eines Werkstücks zum Vergießen oder Überführen von Schmelzen zumindest teilweise mit dem Isolationsmaterial beschichtet.

Vorteilhäfterweise wird das Isolationsmaterial zum Beschichten mit Wasser aufbereitet, wobei dem Isolationsmaterial Wasser in Mengen zugeführt wird, die ein Aufsprühen oder Auftragen, insbesondere Verspachteln, des Isolationsmaterials auf das Werkstück ermöglichen. Der Wasseranteil richtet sich nach der Beschichtungsmethode. Zum Aufsprühen wird die Mischung durch entsprechende Wasserzugabe dünnflüssig gemacht, zur Verwendung als Spachtelmasse wird durch geringe Wasserzugabe eine Paste hergestellt, die in Abhängigkeit der gewünschten bzw. geforderten Schichtdicke mehr oder weniger zähflüssig ausgebildet wird. Gemäß einer besonders vorteilhaften Ausgestaltung der Erfindung wird das Isolationsmaterial in variablen Schichtdicken auf das Werkstück aufgetragen. So kann die Beschichtung hinsichtlich Ihrer Schichtdicke auf dem Werkstück einen Verlauf annehmen, beispielsweise von 3 mm auf 6 mm oder 9 mm und zurück auf 3 mm oder dergleichen. Es lassen sich somit in ihrer Dicke konturierte Isolationsschichten ausbilden, je nach Einsatz- und Isolationsbedarf der Werkstücke. In einer besonders bevorzugten Ausgestaltung der Erfindung wird das Isolationsmaterial in einer Schichtdicke von etwa 1,0 mm auf das Werkstück aufgetragen. Nach dem Versehen der Werkstücke mit dem Isolationsmaterial wird die Beschichtung getrocknet, vorzugsweise bei einer Temperatur von 100 C°

Das Isolationsmaterial und die so ausgebildete Beschichtung eignet sich für Ausgüsse, Gießrohre, Gießstrahlschutzrohre und dergleichen Werkstücke zum Vergießen oder Überführen von Schmelzen, insbesondere auch für stählerne oder keramische Füllkammem sowie stähleme oder keramische Steigrohre, welche zum Vergießen von Aluminiumschmelzen geeignet sind.

## Patentansprüche

1. Verfahren zum Beschichten von Ausgüssen, Gießrohren, Gießstrahlschutzrohren und dergleichen Werkstücken zum Vergießen oder Überführen von Schmelzen, insbesondere von in der Stahlindustrie verwendeten Metallschmelzen, wobei die Oberfläche eines Werkstücks zumindest teilweise mit einem Isolationsmaterial bestehend aus einer Mischung aus wenigstens einem Rohstoff und wenigstens einem Bindemittel, welche zumindest nach einem Aushärten eine mikroporöse Struktur ausbildet, beschichtet wird, **dadurch gekennzeichnet, daß** das Werkstück vor dem Beschichten mit Isolationsmaterial mit einer oxidationshemmenden Beschichtung versehen wird.

2. Verfahren nach Anspruch 1, **dadurch gekennzeichnet, daß** die oxidationshemmende Beschichtung aus einem handelsüblichen Mauer- oder Putzhärter ausgebildet ist.

3. Verfahren nach Anspruch 1 oder 2 **dadurch gekennzeichnet, daß** die oxidationshemmende Beschichtung einen handelsüblichen Feuerfestkleber umfaßt.

4. Verfahren nach einem der Ansprüche 1 bis 3, **dadurch gekennzeichnet, daß** die oxidationshemmende Beschichtung mit Alkalien, Borsäure oder Borsäurederivaten versetzt wird.

5. Verfahren nach Anspruch 4, **dadurch gekennzeichnet, daß** der oxidationshemmenden Beschichtung Alkalien, Borsäure oder Borsäurederivate in Mengen von bis zu 30 Gew-% zugefügt werden.

6. Verfahren nach einem der vorhergehenden Ansprüche, **dadurch gekennzeichnet, daß** die oxidationshemmende Beschichtung vor dem Beschichten mit Isolationsmaterial getrocknet wird, vorzugsweise bei einer Temperatur von 100 C°.

7. Verfahren nach einem der vorhergehenden Ansprüche, **dadurch gekennzeichnet, daß** das Isolationsmaterial zum Beschichten mit Wasser aufbereitet wird.

8. Verfahren nach Anspruch 7, **dadurch gekennzeichnet, daß** dem Isolationsmaterial Wasser in Mengen zugeführt wird, die ein Aufsprühen des Isolationsmaterials auf das Werkstück ermöglicht.

9. Verfahren nach Anspruch 7, **dadurch gekennzeichnet, daß** dem Isolationsmaterial Wasser in Mengen zugeführt wird, die ein Auftragen des Isolationsmaterials auf das Werkstück ermöglicht.

10. Verfahren nach einem der vorhergehenden Ansprüche, **dadurch gekennzeichnet, daß** das Isolationsmaterial auf das Werkstück aufgesprüht wird.

11. Verfahren nach einem der vorhergehenden Ansprüche, **dadurch gekennzeichnet, daß** das lsolationsmaterial auf das Werkstück mit einem Spachtel auftragbar ist.

12. Verfahren nach einem der vorhergehenden Ansprüche, **dadurch gekennzeichnet, daß** das Isolationsmaterial in variablen Schichtdicken aufgetragen wird, vorzugsweise variabel über ein zu beschichtendes Werkstück.

13. Verfahren nach einem der vorhergehenden Ansprüche, **dadurch gekennzeichnet, daß** das Isolationsmaterial in einer Schichtdicke von etwa 1,0 mm aufgetragen wird.

14. Verfahren nach einem der vorhergehenden Ansprüche, **dadurch gekennzeichnet, daß** die Beschichtung aus Isolationsmaterial getrocknet wird, vorzugsweise bei einer Temperatur von 100 C°.

15. Verfahren nach einem der vorhergehenden Ansprüche, **dadurch gekennzeichnet, daß** der mikroporöse Rohstoff Kalziumhexaaluminat mit einer Rohdichte von 0,75 g/cm³ ist.

16. Verfahren nach einem der vorhergehenden Ansprüche, **dadurch gekennzeichnet, daß** der mikroporöse Rohstoff eine mittlere Komgröße von bis zu 1.0 µm aufweist.

17. Verfahren nach einem der vorhergehenden Ansprüche, **dadurch gekennzeichnet, daß** der mikroporöse Rohstoff in Mengen von etwa 65 bis 98 Gew.-% verwendet wird, vorzugsweise in Mengen von etwa 90 Gew.-%.

18. Verfahren nach einem der vorhergehenden Ansprüche, **dadurch gekennzeichnet, daß** das Bindemittel ein Zement ist, vorzugsweise Kalziumalumiatzement.

19. Verfahren nach einem der vorhergehenden Ansprüche, **dadurch gekennzeichnet, daß** das Bindemittel in Mengen von etwa 2 bis 35 Gew.-% verwendet wird, vorzugsweise in Mengen von etwa 10 Gew.%.

20. Verfahren nach einem der vorhergehenden Ansprüche, **dadurch gekennzeichnet, daß** die Mischung desweiteren Additive zur Erhöhung der Grünfestigkeit umfaßt.

21. Verfahren nach einem der vorhergehenden Ansprüche, **dadurch gekennzeichnet, daß** die Mischung desweiteren Additive zur Verbesserung des Abbindeverhaltens umfaßt.

## Claims

1. Method of coating pouring lips, pouring spouts, protective tubes for streams of molten metal and similar components for pouring out or transferring molten materials, especially molten metals used in the steel industry, the surface of a component being at least partly coated with an insulating material consisting of a mixture of at least one raw material and at least one binder, which mixture forms, at least after hardening, a microporous structure, **characterised in that** prior to being coated with insulating material the component is provided with an oxidation-inhibiting coating.

2. Method according to claim 1, **characterised in that** the oxidation-inhibiting coating is formed from a commercially available masonry hardener or plaster hardener.

3. Method according to claim 1 or 2, **characterised in that** the oxidation-inhibiting coating comprises a commercially available fireproof adhesive.

4. Method according to any one of claims 1 to 3, **characterised in that** alkalis, boric acid or boric acid derivatives are added to the oxidation-inhibiting coating.

5. Method according to claim 4, **characterised in that** alkalis, boric acid or boric acid derivatives are added to the oxidation-inhibiting coating in amounts of up to 30 % by weight.

6. Method according to any one of the preceding daims, **characterised in that** prior to coating with insulating material the oxidation-inhibiting coating is dried, preferably at a temperature of 100°C.

7. Method according to any one of the preceding claims, **characterised in that** water is used to prepare the insulating material for coating.

8. Method according to claim 7, **characterised in that** water is added to the insulating material in amounts that facilitate application of the insulating material to the component by spraying.

9. Method according to claim 7, **characterised in that** water is added to the insulating material in amounts that facilitate application of the insulating material to the component.

10. Method according to any one of the preceding claims, **characterised in that** the insulating material is applied to the component by spraying.

11. Method according to any one of the preceding claims, **characterised in that** the insulating material can be applied to the component using a trowel.

12. Method according to any one of the preceding claims, **characterised in that** the insulating material is applied in variable layer thicknesses, preferably variable over a component being coated.

13. Method according to any one of the preceding claims, **characterised in that** the insulating material is applied in a layer thickness of approximately 1 .00 mm.

14. Method according to any one of the preceding claims, **characterised in that** the coating of insulating material is dried, preferably at a temperature of 100°C.

15. Method according to any one of the preceding claims, **characterised in that** the microporous raw material is calcium hexaaluminate having a bulk density of 0.75 g/cm³.

16. Method according to any one of the preceding claims, **characterised in that** the microporous raw material has an average particle size of up to 1.0 µm.

17. Method according to any one of the preceding claims, **characterised in that** the microporous raw material is used in amounts of approximately from 65 to 98 % by weight, preferably in amounts of approximately 90 % by weight.

18. Method according to any one of the preceding claims, **characterised in that** the binder is a cement, preferably a calcium aluminate cement.

19. Method according to any one of the preceding claims, **characterised in that** the binder is used in amounts of approximately from 2 to 35 % by weight, preferably in amounts of approximately 10 % by weight.

20. Method according to any one of the preceding claims, **characterised in that** the mixture also comprises additives for increasing the green strength.

21. Method according to any one of the preceding claims, **characterised in that** the mixture also comprises additives for improving the setting behaviour

## Revendications

1. Procédé de revêtement de becs de coulée, de busettes de coulée, de tubes protecteurs de jets de coulée et d'objets analogues pour la coulée ou le transfert de masses fondues, en particulier de métaux fondus utilisés dans l'industrie de l'acier, moyennant quoi la surface d'un objet est revêtue au moins partiellement d'un matériau isolant constitué d'un mélange comprenant au moins une matière première et au moins un liant qui forme une structure microporeuse au moins après un durcissement, **caractérisé en ce que** l'objet est enduit d'un revêtement antioxydant avant le revêtement avec le matériau isolant.

2. Procédé selon la revendication 1, **caractérisé en ce que** le revêtement antioxydant est constitué d'un durcisseur pour mortier ou plâtre de type commercial.

3. Procédé selon la revendication 1 ou 2, **caractérisé en ce que** le revêtement antioxydant est constitué d'une colle réfractaire de type commercial.

4. Procédé selon l'une quelconque des revendications 1 à 3, **caractérisé en ce que** le revêtement antioxydant est mélangé avec des alcalis, de l'acide borique ou des dérivés d'acide borique.

5. Procédé selon la revendication 4, **caractérisé en ce que** des alcalis, de l'acide borique ou des dérivés d'acide borique sont ajoutés au revêtement antioxydant selon des quantités allant jusqu'à 30 % en poids.

6. Procédé selon l'une quelconque des revendications précédentes, **caractérisé en ce que**, avant le revêtement avec le matériau isolant, le revêtement antioxydant est séché, de préférence à une température de 100°C.

7. Procédé selon l'une quelconque des revendications précédentes, **caractérisé en ce que** le matériau isolant est traité avec de l'eau pour le revêtement.

8. Procédé selon la revendication 7, **caractérisé en ce que** l'on ajoute des quantités d'eau au matériau isolant permettant une pulvérisation du matériau isolant sur l'objet.

9. Procédé selon la revendication 7, **caractérisé en ce que** l'on ajoute des quantités d'eau au matériau isolant permettant une application du matériau isolant sur l'objet.

10. Procédé selon l'une quelconque des revendications précédentes, **caractérisé en ce que** le matériau isolant est pulvérisé sur l'objet.

11. Procédé selon l'une quelconque des revendications précédentes, **caractérisé en ce que** le matériau isolant peut être appliqué sur l'objet avec une spatule.

12. Procédé selon l'une quelconque des revendications précédentes, **caractérisé en ce que** le matériau isolant est appliqué avec des épaisseurs de couches variables, de préférence de manière variable sur un objet à revêtir.

13. Procédé selon l'une quelconque des revendications précédentes, **caractérisé en ce que** le matériau isolant est appliqué avec une épaisseur de couche d'environ 1,0 mm.

14. Procédé selon l'une quelconque des revendications précédentes, **caractérisé en ce que** le revêtement constitué de matériau isolant est séché, de préférence à une température de 100°C.

15. Procédé selon l'une quelconque des revendications précédentes, **caractérisé en ce que** la matière première microporeuse est de l'hexa-aluminate de calcium ayant une masse volumique apparente de 0,75 g/cm³.

16. Procédé selon l'une quelconque des revendications précédentes, **caractérisé en ce que** la matière première microporeuse présente une grosseur de grains moyenne allant jusqu'à 1,0 µm.

17. Procédé selon l'une quelconque des revendications précédentes, **caractérisé en ce que** la matière première microporeuse est utilisée en quantités allant d'environ 65 % à 98 % en poids, de préférence en quantités d'environ 90 % en poids.

18. Procédé selon l'une quelconque des revendications précédentes, **caractérisé en ce que** le liant est un ciment, de préférence du ciment d'aluminate de calcium.

19. Procédé selon l'une quelconque des revendications précédentes, **caractérisé en ce que** le liant est utilisé en quantités allant d'environ 2 % à 35 % en poids, de préférence en quantités d'environ 10 % en poids.

20. Procédé selon l'une quelconque des revendications précédentes, **caractérisé en ce que** le mélange comprend, en outre, des additifs pour augmenter la résistance à vert.

21. Procédé selon l'une quelconque des revendications précédentes, **caractérisé en ce que** le mélange comprend, en outre, des additifs pour améliorer le comportement de prise.
